# EUROPÄISCHE PATENTSCHRIFT

(11) **EP 2 688 697 B1**
(45) Veröffentlichungstag und Bekanntmachung des Hinweises auf die Patenterteilung: **21.01.2015**
(21) Anmeldenummer: 12706184.4
(22) Anmeldetag: 09.02.2012
(51) Int. Cl.: B21D 51/38, B21D 51/44, B65D 17/50

(54) **VORRICHTUNG UND VERFAHREN ZUR HERSTELLUNG VON AUFREISSDECKELN**
DEVICE AND METHOD FOR PRODUCING TEAR-OFF LIDS
DISPOSITIF ET PROCEDE POUR LA FABRICATION DE COUVERCLES A OUVERTURE PAR ARRACHAGE

(30) Priorität: 25.03.2011 CH 553112011
(43) Veröffentlichungstag der Anmeldung: 29.01.2014
(73) Patentinhaber: Soudronic AG, 8962 Bergdietikon (CH)
(72) Erfinder: LANZ, Andreas, 8962 Bergdietikon (CH); SCHULTHESS, Oliver, 8610 Uster (CH); TAIANA, Peter, 5432 Neuenhof (CH)
(74) Vertreter: Schalch, Rainer
(86) Internationale Anmeldenummer: PCT/CH2012/000034
(87) Internationale Veröffentlichungsnummer: WO 2012/129710

(56) Entgegenhaltungen:
- EP-A1- 1 386 852
- EP-A2- 2 208 554
- US-A- 3 380 622

## Beschreibung

### Hintergrund

Die Erfindung betrifft eine Vorrichtung zur Herstellung von Aufreissdeckeln gemäss Oberbegriff des Anspruchs 1. Ferner betrifft die Erfindung ein Verfahren zur Herstellung von Aufreissdeckeln gemäss Oberbegriff von Anspruch 9.

### Stand der Technik

Es ist bekannt, Deckel für dosen- oder büchsenartige Verpackungen als auf der Verpackung oberseitig permanent befestigte Metalldeckel auszuführen, die einen Deckelring mit einer Entnahmeöffnung aufweisen. Die Entnahmeöffnung bleibt bis zum ersten Gebrauch des Verpackungsinhaltes mittels einer wegreissbaren Folie verschlossen. Diese Folie ist durch Heisssiegelung auf dem Deckelring befestigt. Solche Deckel werden als Aufreissdeckel bezeichnet. Die Folie auf dem Deckel wird als Aufreissfolie bezeichnet und kann z.B. eine Metallfolie, eine Metallverbundfolie oder eine reine Kunststofffolie sein. Ein zusätzlicher, über dem Metalldeckel angeordneter Deckel aus Kunststoff macht die Verpackung während der Verbrauchsdauer des Inhalts wieder verschliessbar. Zum manuellen Öffnen des Aufreissdeckels, bzw. zum Wegreissen der aufgesiegelten Folie, weist die Aufreissfolie eine Aufreisslasche auf. Die Aufreisslasche wird bei der Deckelherstellung nach dem Siegelprozess in Richtung auf die Oberseite der Aufreissfolie, bzw. zur Oberseite des Deckels, umgebogen, so dass sie über der Siegelfolie zu liegen kommt. Bis ein solcher Deckel auf einem verschlossenen Behälter mit einem darin enthaltenen Produkt den Endkunden erreicht, sind weitere Schritte notwendig, wie Stapeln der Deckel, Lagern, Entstapeln der Deckel, Verschliessen eines Behälters mit dem Deckel, Waschen, Sterilisieren (bis 130 Grad Celsius), erneutes Waschen, Aufbringen von Etiketten, Verpacken. Bei diesen Schritten ist die Aufreisslasche der Gefahr ausgesetzt, dass sie beschädigt werden kann, so dass sie dem Endkunden nicht mehr nutzen kann. Andererseits kann eine Lasche, die sich aus der umgebogenen Stellung entfernt bzw. sich aufrichtet, die genannten Schritte stören, z.B. den Verschliessvorgang des Behälters durch den Deckel. So wird z.B. der vorgefertigte Aufreissdeckel am Mantel der Dose aufgebördelt. Bei diesem Herstellungsschritt kann eine abstehende Aufreisslasche stören, sie kann zerknittern und kann sogar abgerissen werden. Es ist daher gewünscht, dass die Aufreisslasche bei der Deckelherstellung auf den Deckel zurückgebogen wird und diese Position beibehält, bis der mit dem Deckel versehene Behälter beim Endkunden ist. Ein einfaches Umbiegen ohne weitere Massnahmen ist bei Metallfolien möglich, doch kann auch bei diesen Dosen bei der Sterilisation der befüllten und verschlossenen Dose die Wärmeeinwirkung und der Abkühlvorgang eine Verformung der Aufreissfolie und ein unerwünschtes Abstehen der Aufreisslasche bewirken. Bei Verbundfolien aus Metall und Kunststoff oder bei Folien nur aus Kunststoff ist ein dauerhaftes Zurückbiegen auf die Oberseite der Aufreissfolie schwieriger und es ergibt sich noch eher ein Abstehen bei der Sterilisation auf Grund von unterschiedlicher Wärmeausdehnung der Schichten. Für Trockenprodukte aufnehmende Dosen, welche nicht sterilisiert werden müssen, ist es bereits bekannt, nach dem Aufsiegeln der Aufreissfolie auf den Deckel die zurückgebogene Aufreisslasche mit Hotmelt-Klebstoff auf dem Deckel zu fixieren. Dieser Produktionsschritt ist allerdings aufwendig. Für zu sterilisierende Dosen ist er zudem nicht verwendbar, da Hotmelt-Klebstoff unter den Sterilisationsbedingungen versagen kann.

Aus EP-A 2 208 554 ist es bekannt, vor dem Ausstanzen des Aufreissfolienabschnittes für den Deckel und somit vor der Aufsiegelung der Aufreissfolie auf dem Deckelring, ein Stück doppelseitiges Klebeband als Klebefläche auf die Aufreissfolie aufzubringen. Diese Klebefläche bleibt während der Siegelung von einer Schutzfolie geschützt, welche dann vor dem Umbiegen der Aufreisslasche entfernt werden muss. EP-A 1 386 852 zeigt ein ähnliches Vorgehen mit Aufbringen eines Klebebandes oder mittels Heissiegelung der Aufreisslasche. WO-A 2006/029991 zeigt die Befestigung der Aufreisslasche durch Heissiegelung.

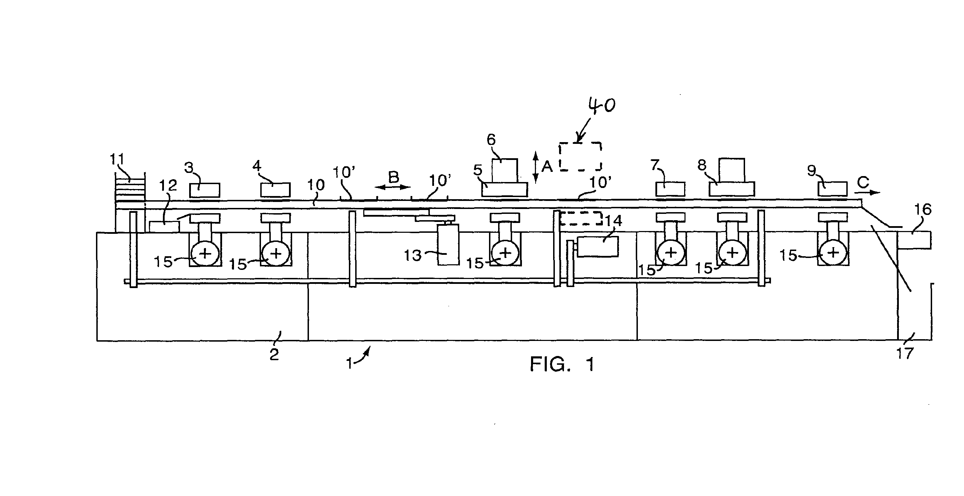

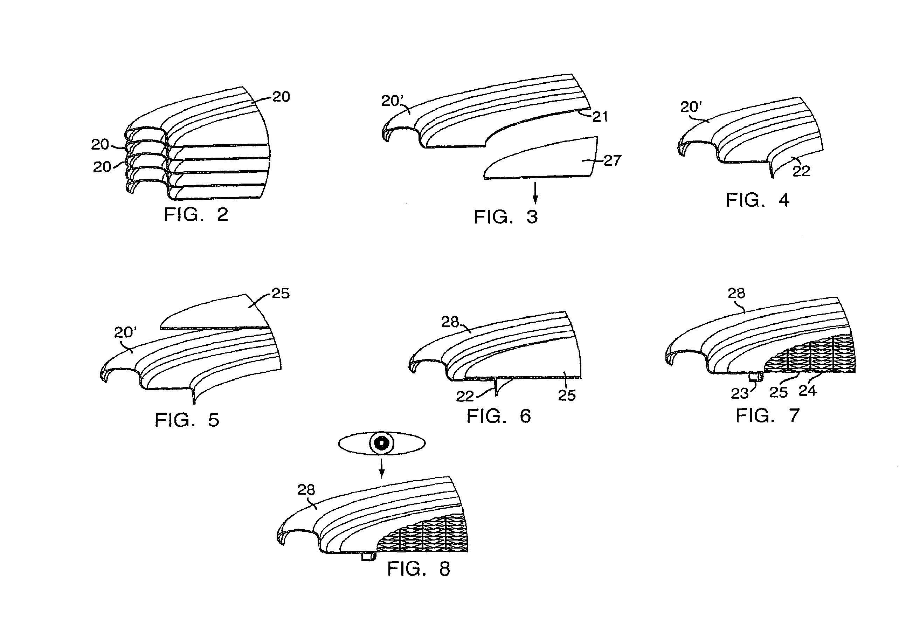

Bekannte Verfahren bzw. Vorrichtungen zur Herstellung von Aufreissdeckeln werden nachfolgend anhand der Figuren 1 bis 9 näher erläutert. Die Figuren 2 bis 8 dienen dabei zur Erläuterung von Herstellungsschritten.

### Darstellung der Erfindung

Der Erfindung liegt die Aufgabe zu Grunde, eine Verbesserung bei Vorrichtungen zur Herstellung von Aufreissdeckeln zu schaffen, die zu einer einfach einsetzbaren und zuverlässigen Befestigung der Aufreisslasche führt. Diese Verbesserung soll bei der Herstellung von Aufreissdeckeln mit hoher Fertigungskadenz von 200 oder mehr Deckeln pro Minute zuverlässig einsetzbar sein.

Zur Lösung der Aufgabe wird vorgesehen, dass zwischen der Siegelstation und der Umbiegestation eine Klebebearbeitungsstation mit einer Einrichtung vorgesehen ist, durch welche ein Klebeband transportierbar und eine von einem Trägerband des Klebebandes ablösbare Klebefläche bereitstellbar ist, die in der Klebebearbeitungsstation auf die Oberseite des vorgängig auf den Deckelring aufgesiegelten Folienabschnitts an der Stelle aufbringbar ist, an welcher in der Umbiegestation die Aufreisslasche zu liegen kommt.

Dadurch, dass auf jeden Deckelring nach der Aufsiegelung der Aufreissfolie, also somit auf den bereits gebildeten Deckel, in einer folgenden Bearbeitungsstation eine Klebefläche aufgebracht wird, indem von einem Klebeband eine einzelne Klebefläche bereitgestellt und aufgebracht wird, kann auf eine Schutzfolie über der Klebefläche verzichtet werden, da im nächsten Schritt direkt in der Vorrichtung oder in einem der nächsten Schritte direkt in der Vorrichtung bereits das Umbiegen der Aufreisslasche folgt. Das Bereitstellen der Klebeflächen mittels eines transportierten Klebebands ermöglicht dabei eine deckelsynchrone Bereitstellung mit hoher Geschwindigkeit.

Es ist möglich, dass das Klebeband bereits eine Abfolge von voneinander getrennten Klebeflächen aufweist, welche nacheinander auf die einander folgenden Deckel appliziert werden. Bevorzugt ist es aber, dass die Einrichtung ein Trennmittel aufweist, welches derart angeordnet und ausgestaltet ist, dass aus einem auf dem Trägerband durchgehend angeordneten Klebematerial bzw. Klebefilm einzelne, voneinander getrennte Klebeflächen bildbar sind. Diese können dann nacheinander auf die einander folgenden Deckel appliziert werden. Die Bildung der getrennten Klebeflächen auf dem Klebeband durch die Einrichtung erleichtert die Synchronisation zwischen Deckelbildung und Zuführung der Klebeflächen bei der Klebebearbeitungsstation. Bevorzugt ist als Trennmittel eine gesteuert in Richtung auf eine Andruckplatte auslenkbare Trennklinge vorgesehen, wobei zwischen Trennklinge und Andruckplatte ein Durchlaufraum für das Klebeband vorgesehen ist. Damit kann das durch den Durchlaufraum transportierte Klebeband bzw. dessen Klebefilm auf dem Trägerband (liner) des Klebebands zuverlässig in einzelne Klebflächen unterteilt werden. Das Trägerband wird dabei nicht durchgetrennt. Eine bevorzugte Beheizung des Trennmittels, z.B. auf einen Wert von 200 Grad Celsius bis 250 Grad Celsius verhindert ein Verschmutzen des Trennmittels bzw. der Klinge und verbessert die Trennung des Kleberfilms in einzelne, klar voeinander getrennte Klebeflächen, die durch das Trennmittel gebildet werden. Die Trennung der Klebeflächen benötigt nicht zwangsläufig eine ganz vollständige Trennung zwischen aufeinander folgenden Klebflächen, obwohl dies bevorzugt ist. Es zeigt sich, dass auch eine weitgehende Trennung genügt, um bei der nachfolgenden Bereitstellung ein Abreissen des Klebefilms zwischen benachbarten Klebeflächen zu bewirkten.

Weiter ist es bevorzugt, wenn die Einrichtung für die Bereitstellung der einzelnen Klebeflächen eine Umlenkung für das transportierte Klebeband aufweist, welche in Transportrichtung nach dem Trennmittel angeordnet ist und das Klebeband z.B. um ca. 90 Grad umlenkt und insbesondere im Wesentlichen in horizontale Lage umlenkt, und dass die Klebebearbeitungsstation derart ausgestaltet ist, dass der jeweils mit der Klebefläche zu versehende Deckel gegen die Umlenkfläche hin bewegbar und an diese andrückbar ist. Dies erlaubt ein einfaches und rasches Aufbringen der Klebefläche auf den Deckel, bzw. das Übernehmen der Klebefläche von der Einrichtung auf die Deckeloberfläche, in der Klebebearbeitungsstation im Takt mit den anderen Bearbeitungsstationen der Vorrichtung, und durch die selbe Art der Deckelbewegung wie in anderen Bearbeitungsstationen (abheben vom und zurücklegen auf das Fördermittel bzw. dessen Deckelaufnahmen) so dass durch das Aufbringen der Klebefläche keine Verlangsamung der Deckelherstellung erfolgt. Bevorzugt wird vorgesehen, dass ein Unterbruch des Transports des Klebebands bzw. keine Bereitstellung einer Klebefläche erfolgt, wenn festgestellt wird, dass in der Deckelaufnahme der Bearbeitungsstation kein Deckel vorhanden ist.

Bevorzugt wird das Klebeband in Form einer Rolle eingesetzt. Das Klebeband ist ein handelsübliches sogenanntes Transferklebeband, bei dem der Klebefilm vom Trägeband ablösbar und danach alleine verwendbar ist. Es wird daher bevorzugt, dass die Einrichtung eine Rollenhalterung für eine Klebebandrolle und eine zum umfangseitigen Aufliegen auf der Klebebandrolle angeordnete Umlenkrolle aufweist. Die Umlenkrolle, die auf der aussen an der Rolle liegende Trägerbandseite der Rolle aufliegt und zudem vorzugsweise mit einer haftungsarmen Beschichtung (z.B. Silikon) versehen sein kann oder aus solchem Material gebildet ist, ermöglicht ein Abziehen des Klebebands von der Rolle ohne dass der Klebefilm dabei Kleberfäden bildet, die eine Verschmutzung der Einrichtung bzw. der Klebebearbeitungsstation bewirken könnten.

Eine Verschmutzung und ein sicherer Transport wird ferner dadurch ermöglicht, dass bevorzugt ein Antriebsmittel für den Transport des Klebebands eingesetzt ist, welches derart angeordnet und ausgestaltet ist, dass dadurch erst nach Ablösung der Klebeflächen und somit lediglich auf das Trägerband einwirkbar ist. Der Antrieb des Klebebandes erfolgt somit bevorzugt nach der auf das Trennmittel folgenden Umlenkstelle durch Einwirkung auf das nach der Wegnahme der Klebeflächen verbleibende Trägerband, das nicht klebt. Dieses kann zwischen Antriebsrollen gefördert werden. Der Antrieb bzw. der Transport des Klebebands erfolgt schrittweise nach den Anforderungen des Takts der Bearbeitungsstation, z.B. durch einen Schrittmotorantrieb oder einen Servomotorantrieb oder einen pneumatischen Antrieb.

Ein störungsfreier Betrieb bzw. die Verhinderung von fehlerhaften Deckeln ohne Klebefläche für die Aufreisslasche auch beim Erreichen des Endes der Klebebandrolle und/oder beim Reissen des Klebebands kann sicher gestellt werden, wenn die Einrichtung Detektionsmittel für das Erreichen des Endes des Klebebandes und/oder ein Reissen des Klebebandes umfasst sowie bevorzugt Bremsmittel, die direkt auf das abgerollte Klebeband vor dem Trennmittel auf das Klebeband einwirken und somit den Transport des in solchen Fällen nicht mehr von der Klebebandspule gebremsten Klebebandes mit der nötigen Bandspannung für eine korrekte Trennung durch das Trennungsmittel ermöglichen.

Eine weitere Aufgabe liegt in der Schaffung eines Verfahrens zur Herstellung von Aufreissdeckeln, welches auf einfache Weise eine sichere Befestigung der Aufreisslasche auf dem Deckel ergibt.

Diese Aufgabe wird durch ein Vorgehen gemäss Anspruch 9 gelöst.

### Kurze Beschreibung der Zeichnungen

Im Folgenden wird der Stand der Technik und werden Ausführungsbeispiele der Erfindung anhand der Zeichnungen näher erläutert. Dabei zeigt
Figur 1 eine schematische Seitenansicht einer Vorrichtung nach Stand der Technik sowie zur Ausführung der vorliegenden Erfindung;
Figur 2 bis Figur 8 Sektoren von Metalldeckeln zur Erläuterung von deren Herstellung;
Figur 9 eine Draufsicht auf einen Aufreissdeckel gemäß der Erfindung;
Figur 10 eine teilweise Schnittdarstellung des Aufreissdeckels von Figur 9;
Figur 11 eine schaubildliche Ansicht auf die Einrichtung zur Bildung der Klebeflächen; und
Figur 12 eine Seitenansicht auf eine Ausführungsform des Trennmittels und die Deckelaufnahme

### Wege zur Ausführung der Erfindung

Figur 1 zeigt eine schematische Seitenansicht einer Vorrichtung 1 zur Herstellung von Aufreissdeckeln. Diese weist auf einem Maschinengestell 2 mehrere Bearbeitungsstationen 3 bis 9 auf. Ist die Vorrichtung gemäss der Erfindung ausgestaltet, so weist sie ferner eine Klebebearbeitungsstation 40 auf, die in der Figur angedeutet ist und noch genauer erläutert wird. Eine Fördereinrichtung fördert Deckelteile und die fertigen Deckel taktweise in Förderrichtung, welche durch den Pfeil C angedeutet ist, vom Anfang der Vorrichtung beim Stapel 11 bis zum Ende der Vorrichtung, wo die Deckel über Rutschen in die Ablagen 16 oder 17 gelangen.

Im Rahmen der vorliegenden Erfindung kann die Fördereinrichtung beliebig ausgestaltet werden. Bevorzugt wird eine dem Fachmann bekannte Fördereinrichtung mit zwei Zahnriemen und an diesen angeordneten Aufnahmen für die Deckelteile und Deckel gemäss WO 2006/017953 verwendet. Ein solcher endloser Zahnriemenantrieb wird in der für die Anzahl der Bearbeitungsstationen notwendigen Länge vorgesehen und die schrittweise Zahnriemenbewegung, die mit den Bearbeitungsstationen synchronisiert ist, wird durch einen Schrittmotor oder Servomotor bewirkt. Die Fördereinrichtung mit Zahnriemen erlaubt die Herstellung von Deckeln mit einer hohen Taktzahl von z.B. 200 Deckeln pro Minute.

Die in Figur 1 dargestellte Fördereinrichtung ist von einem herkömmlichen anderen Typ, der ebenfalls verwendbar ist. Vom Stapel 11 werden Deckelteile auf bekannte Weise abgestapelt und gelangen in die Fördereinrichtung 10, 13, 14 Diese kann zwei jeweils einzeln seitlich der Gegenstände angeordnete lange Schienen 10 aufweisen, welche die auf Ablagen 10' bzw. in den Stationen 3 bis 9 liegenden Deckelteile bzw. Deckel beim Anheben der Stangen 10 mittels des Antriebes 14 in Richtung des Pfeils A nach oben anheben und sie danach durch eine Vorwärtsbewegung in Richtung des Pfeils B (gleichgerichtet wie der Pfeil C) durch den Kurbelantrieb 13 um einen Betrag nach vorne versetzen. Danach werden die Stangen in Richtung des Pfeils A nach unten bewegt wobei die Deckelteile und Deckel wiederum auf ihren Ablagestellen abgelegt werden. Die Stangen 10 werden danach unterhalb der Gegenstandsablagepositionen in Pfeilrichtung B entgegen dem Pfeil C nach hinten bewegt um danach den beschriebenen Vorgang erneut durchzuführen. Die Deckelteile bzw. Deckel ruhen zwischen dem Transport auf ihren Ablagepositionen bzw. befinden sich in den Bearbeitungsstationen und werden dort bearbeitet, wozu sie insbesondere durch die Bearbeitungsstation angehoben, bearbeitet und wieder in die Ablageposition abgelegt werden. Dies gilt auch bei einer Förderung der Deckelteile und Deckel mit den erwähnten Zahnriemen. Nach einem Bearbeitungsschritt durch alle Bearbeitungsstationen erfolgt die erneute Förderung.

Figur 2 zeigt gestapelte metallene Deckelrohlinge 20, wie sie im Stapel 11 am Anfang der Fördereinrichtung bereit sind. Diese Rohlinge 20 sind z.B. runde Metallscheiben von z.B. 11 cm Durchmesser. Natürlich sind andere Grundformen, z.B. quadratische oder rechteckige Scheiben und andere Durchmesser ohne weiteres möglich. Die Rohlinge 20 sind bereits in einer nicht dargestellten Bearbeitungsmaschine an ihrem Rand wie in Figur 2 gezeigt vorgeformt worden. In der Figur 2 und den nachfolgenden Figuren 3 bis 9 ist jeweils nur ein Sektor der ganzen Scheibe bzw. des Deckels dargestellt, um die Figuren zu vereinfachen.

In der ersten Bearbeitungsstation 3 von Figur 1 wird durch eine Stanzbearbeitung mit Ober- und Unterwerkzeug eine Öffnung in die Scheibe gestanzt, was in Figur 3 ersichtlich ist, in welcher der Rand der Öffnung mit 21 bezeichnet ist und die ausgestanzte runde Scheibe mit 27. Diese Scheibe 27 gelangt als Abfall in den Behälter 12 von Figur 1. Es entsteht somit ein ringförmiger Deckelteil bzw. Deckelring 20' mit einer Öffnung, welche die Entnahmeöffnung des fertigen Deckels bildet. Die Stanzbearbeitungsstation 3 wird - wie dies auch bei den weiteren Stationen der Fall ist - durch einen Antrieb 15 angetrieben. Bei der Bearbeitungsstation 4 erfolgt ein Ziehen des Randes 21 nach unten, wodurch z.B. die in Figur 4 gezeigte Form 22 des Randes erzielt wird.

Die Deckelringe 20' gelangen dann in die Siegelstation 5. Es kann auch vorgesehen sein, dass die Deckelteile vor der Siegelstation um 180 Grad gedreht bearbeitet werden und dass vor der Siegelstation eine Wendestation angeordnet ist, welche die Deckelringe wendet. In der Siegelstation 5 wird ein Folienabschnitt 25 mit Stanzmitteln 6 ausgestanzt und über der Öffnung des Deckelrings 20' platziert und dort durch Heissversiegelung befestigt, was in den Figuren 5 und 6 ersichtlich ist. Die Aufreissfolie 25, die eine Metallfolie oder Verbundfolie oder eine Kunststofffolie sein kann, ist dazu auf bekannte Weise an ihrer Unterseite mit einer siegelfähigen Kunststoffschicht versehen. Die Aufreissfolie 25 kann z.B. eine Mehrschichtverbundfolie mit Kunststoffschichten und Aluminiumschichten sein und z.B. an der Deckelunterseite eine Schicht aus heissiegelfähigem Polypropylen (PP) und eine folgende Schicht aus PET aufweisen, die von einer Aluminiumschicht gefolgt ist, welche an der Oberseite der Aufreissfolie wieder mit einer PET-Schicht versehen ist. Eine allfällige Bedruckung ist dann unter dieser PET-Schicht angeordnet. Eine weitere Ausgestaltung der Aufreissfolie kann eine deckelunterseitige bzw. füllgutseitige Heisssiegellackschicht gefolgt von der Aluminiumschicht und der deckeloberseitigen PET-Schicht sein. Auch weitere Ausgestaltungen sind dem Fachmann bekannt und können im Rahmen der vorliegenden Erfindung verwendet werden. Der benötigte, in diesem Beispiel runde Folienzuschnitt 25 wird in der Regel in der Station 5,6 aus einer breiten Folienbahn ausgestanzt und über der Mittelausnehmung der ringförmigen Scheibe platziert und durch die Siegelstation wird die Folie am Rand der runden Ausnehmung des Deckelrings 20' unter Hitzeinwirkung angepresst, so dass die Folie 25 mit dem metallenen Deckelring 20' durch Aufschmelzen und nachfolgendes Abkühlen der siegelfähigen Schicht dicht verbunden wird. Es kann auch ein zweistufiger Siegelschritt mit Vorsiegelung und Hauptsiegelung verwendet werden. Dies ist bekannt und wird hier nicht näher erläutert. Damit ist der Aufreissdeckel 28 gebildet.

Da die vorliegende Erfindung eine Vorrichtung zur Herstellung eines Aufreissdeckels mit einer Aufreisslasche betrifft, ist ferner eine Umbiegestation 7 vorgesehen, in welcher die Aufreisslasche jedes Deckels umgebogen wird, so dass sie auf dem Deckel zu liegen kommt. Solche Umbiegestationen sind bekannt und das Einwirken auf die Aufreisslasche, z.B. mit mechanischen Mitteln und/oder Druckluft, zu deren Umbiegung wird in der Folge nicht weiter erläutert. In einer Bearbeitungsstation 8 kann die Folie 25 mit einer Prägung 24 (Figur 7) versehen werden, und es kann weiter der Rand 22 zum fertigen Rand 23 umgebördelt werden, wenn dies nicht bereits in einer vorgängigen Bearbeitungsstation, z.B. vor der erwähnten Wendestation, erfolgt ist. In einer ebenfalls als Bearbeitungsstation zu bezeichnenden Prüfstation 9 werden die fertigen Deckel einer Prüfung unterzogen, welche in der Regel eine Dichtheitsprüfung für die auf dem Deckel aufgebrachte Aufreissfolie 25 umfasst. Ist die Folie dicht auf dem Deckelring befestigt, so gelangt der Deckel in die Aufnahme 16 für die fertigen Deckel. Wird eine Undichtigkeit festgestellt, so gelangt der Deckel über die andere dargestellte Rutsche in den Abfallbehälter 17.

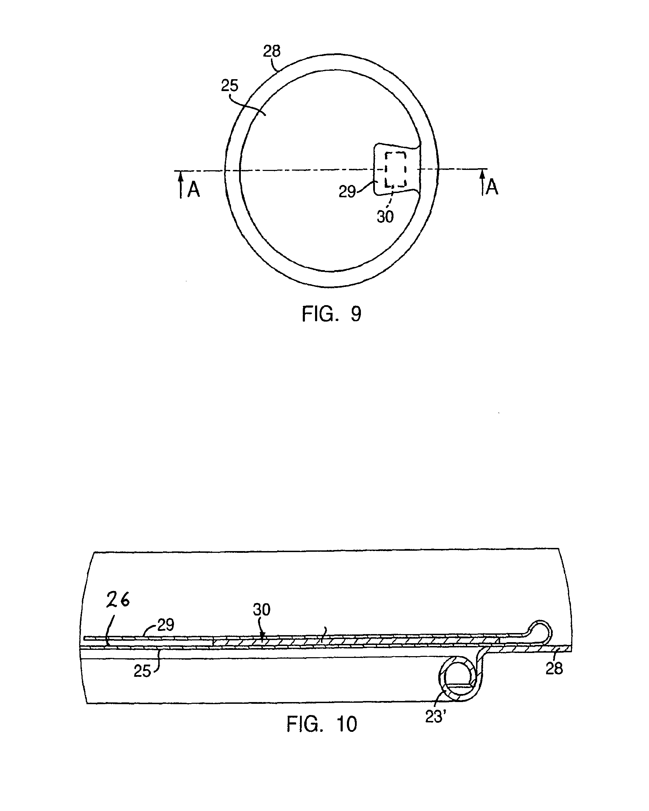

Figur 9 zeigt einen fertigen Aufreissdeckel 28 in Draufsicht. Die Aufreissfolie 25 ist mit einer Aufreisslasche 29 versehen, welche auf den Deckel zurückgebogen ist. Die Aufreisslasche ist am Deckel mit einer in Figur 9 unsichtbaren, da unter der Aufreisslasche liegenden, aber in der Figur durch eine unterbrochene Linie angedeuteten Klebefläche 30 befestigt. Gemäss der nachfolgend erläuterten Weise der Bereitstellung der Klebefläche 30 besteht diese aus einem Abschnitt eines Kleberfilms eines sogenannten Transferkleberbands, der auf den Deckel aufgebracht wird. Die Länge der im Beispiel rechteckigen Klebefläche in Figur 9 entspricht dabei der Breite des Klebebands. Figur 10 zeigt eine vergrösserte Darstellung des Bereichs des Aufreissdeckels mit der Aufreisslasche 29, die in der zurückgebogenen Stellung lösbar an der Klebefläche befestigt ist. Die Lasche 29 steht über die Klebefläche 30 vor, damit die Lasche zum Öffnen des Aufreissdeckels einfach gegriffen und von der Klebefläche 30 gelöst werden kann. Ein Transferklebeband mit einem Kleberfilm auf Acrylbasis eignet sich für eine solche Ausführung und wird z.B. von der Firma Tesa oder der Firma 3M hergestellt. Der Rand der Entnahmeöffnung ist in diesem Beispiel mit einer anderen Form 23' versehen als in Figur 7.

Figur 1 zeigt eine bereits erläuterte Vorrichtung zur Herstellung von Aufreissdeckeln. Gemäss der Erfindung ist eine Klebebearbeitungsstation 40 mit einer Einrichtung vorgesehen, durch welche ein Klebeband schrittweise transportierbar und eine von einem Trägerband des Klebebandes ablösbare Klebefläche bereitstellbar ist, die in der Klebebearbeitungsstation auf die Oberseite des vorgängig auf den Deckelring aufgesiegelten Folienabschnitts an der Stelle aufbringbar ist, an welcher in der Umbiegestation die Aufreisslasche zu liegen kommt. Die Klebebearbeitungsstation kann so ausgestaltet sein, dass sie nur Elemente oberhalb des Fördermittels der Vorrichtung aufweist. In einer solchen Form eignet sie sich besonders zur Nachrüstung von bestehenden Vorrichtungen. Die Einrichtung, die die Klebefläche bereitstellt, bringt in diesem Fall die Klebefläche auf den in Ruhe auf dem Fördermittel liegenden Deckel auf, z.B. indem die Einrichtung die Klebefläche nach unten auf den Deckel andrückt. Bei der schematisch in der Figur 1 angedeuteten Klebebearbeitungsstation ist auch unterhalb des Fördermittels ein Element der Bearbeitungsstation 40 vorgesehen, so dass der Deckel aus seiner Ruheposition auf dem Fördermittel anhebbar ist, so dass der Deckel zur Übernahme der Klebefläche gegen die oberhalb des Fördermittels angeordnete Einrichtung der Bearbeitungsstation 40 hin bewegt wird. Es ergibt sich somit eine Deckelbewegung nach oben wie in anderen Bearbeitungsstationen der Vorrichtung, insbesondere wie in der Siegelstation. Es ist daher möglich, die Deckelbewegung in der Klebebearbeitungsstation durch denselben Antrieb zu ermöglichen, der dies in der Siegelstation bewirkt. Auch dies erleichtert eine Nachrüstlösung. Andererseits kann die Klebebearbeitungsstation auch mit einem selbständigen Antrieb ausgebildet sein, welche einen eigenen Antrieb für ein Anheben des Deckels aus der Ruheposition im Fördermittel und somit ein Bewegen gegen die Einrichtung hin aufweist. Steuerungsmässig ist die Klebebearbeitungsstation aber auch in diesem Fall mit der Steuerung der Vorrichtung verbunden, damit das Aufbringen der Klebefläche im Takt mit den anderen Bearbeitungsvorgängen bei der Deckelherstellung erfolgt.

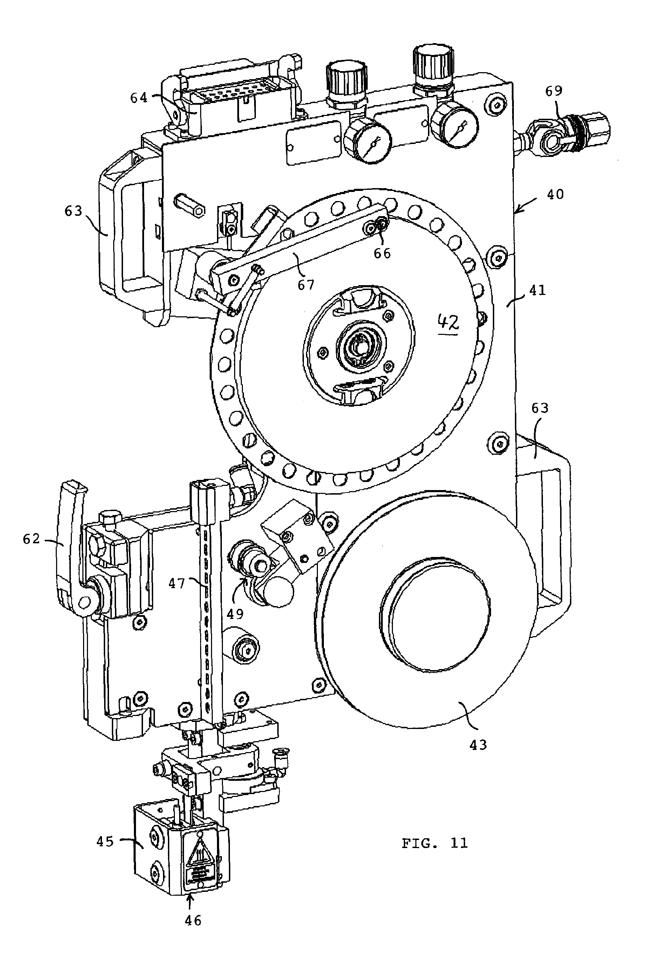

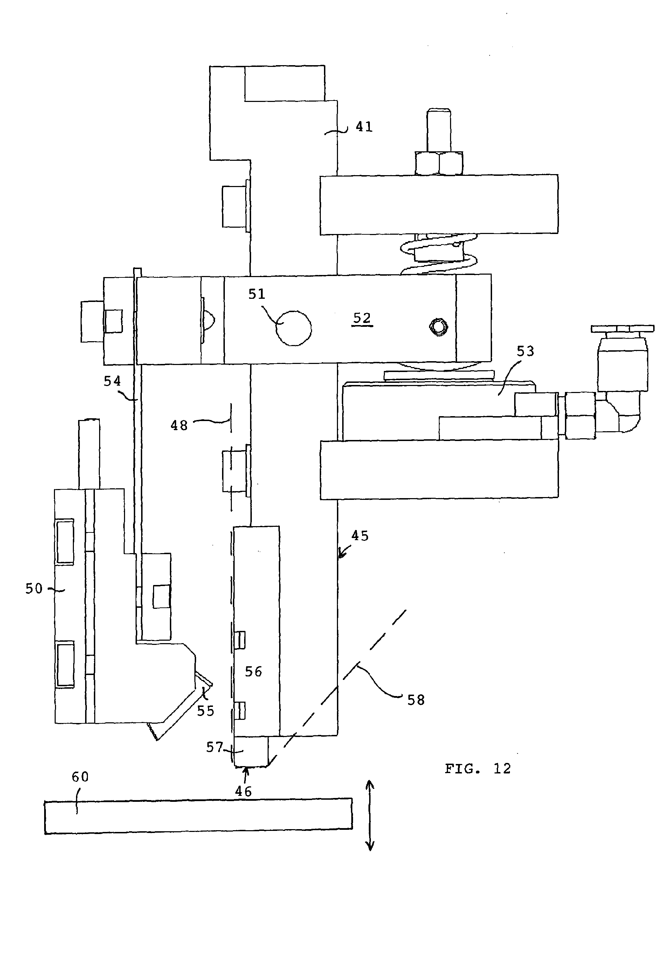

Bevorzugte Ausführungen werden an Hand der Figuren 11 und 12 näher erläutert. Dabei zeigt Figur 11 die Einrichtung 41 der Klebebearbeitungsstation 40. Figur 12 zeigt ein Detail dieser Einrichtung sowie grob schematisch das unterhalb des Fördermittels befindliche Element 60 der Bearbeitungsstation 40.

Die Einrichtung 41 der Klebebearbeitungsstation 40 ist im vorliegenden Beispiel als eine Einheit ausgebildet, welche mittels Handgriffen 63 und z.B. mindestens einer Klemmanordnung 62 einfach oberhalb des Fördermittels in Arbeitsstellung befestigbar und zur Wegnahme lösbar ist. An der Vorrichtung sind entsprechende Befestigungsschienen oder ähnliche Mittel vorzusehen, welche hier nicht gezeigt sind. Diese bevorzugte Ausgestaltung ermöglicht eine Wegnahme der Einrichtung, wenn diese nicht gebraucht wird, wenn also z.B. mit der Vorrichtung Deckel ohne Aufreisslaschen hergestellt werden. Anstelle dieser Ausgestaltung kann eine Einrichtung 41 aber auch fix montiert an der Vorrichtung vorgesehen sein.

Die Einrichtung 41 ist vorzugsweise so ausgestaltet, dass das Transferklebeband in Form einer Klebebandrolle 42 an der Einrichtung gehalten wird. Dazu ist eine nicht näher erläuterte Rollenhalterung vorgesehen. Von der Klebebandrolle wird das Klebeband abgezogen. Das abgezogene Klebeband ist in Figur 11 nicht dargestellt und in Figur 12 nur mit der unterbrochenen Linie 48 angedeutet. Dies gilt auch für das Trägerband 58 des Klebebands nach der Ablösung des Kleberfilms bzw. der einzelnen Kleberfilmabschnitte. Von der Klebebandrolle wird das Klebeband über eine in der Figur 11 nur mit ihrer Lagerung 66 sichtbaren Umlenkrolle geführt, welche vorzugsweise mit einer Beschichtung versehen ist bzw. aus einem Material gebildet ist, an dem der Klebstoff des Klebefilms nicht oder nur schlecht haftet. Dies kann z.B. ein Silikonmaterial sein. Die Umlenkrolle wird an einem Hebel 67 so gehalten und an den abnehmenden Rollendurchmesser angepasst, dass die Umlenkrolle immer aussen auf der Klebebandrolle 42 aufliegt. Damit ist ein Abziehen des Klebebands von seiner Rolle ohne die Bildung von Kleberfäden möglich. Die Klebebandrolle 42 bzw. die Rollenhalterung wird durch eine nicht näher erläuterte Bremse gebremst, um das abgezogene Klebeband unter Spannung zu halten, so dass dessen Verlauf definiert ist. Das abgezogene Klebeband gelangt in das Trennmittel 45 der Einrichtung 41 der Klebebearbeitungsstation 40. In dem Trennmittel 45 wird der durchgehende Klebefilm des Transferklebebands in einzelne Klebeflächen 30 unterteilt, damit sie einzeln auf die Deckel aufgebracht werden können. Wenn alternativ das Klebeband bereits herstellerseitig mit einzelnen Klebeflächen anstelle einer durchgehenden Kleberbeschichtung versehen ist, dann entfällt das Trennmittel der Klebebearbeitungsstation 40. Nach der Trennung werden die einzelnen Klebeflächen zur Aufbringung auf die Deckel bereitgestellt. Dies erfolgt bevorzugt durch eine Umlenkung des Klebebandes nach dem Trennmittel, was in Figur 11 durch die Bandapplikationsfläche 46 an der Unterseite des Trennmittels 45 schematisch dargestellt ist. Durch die Umlenkung kann sich einerseits der vereinzelte Klebefilmabschnitt bzw. die Klebefläche 30 mindestens teilweise vom Trägerband des Klebebands lösen, oder zumindest wird das Lösen nachfolgend erleichtert, und die Klebefläche 30 wird in eine Position gebracht, aus der eine vereinzelte Klebefläche auf den Deckel aufbringbar ist. Dies kann durch ein Absenken der ganzen Einrichtung 41 erfolgen oder vorzugsweise durch ein Anheben des Deckels bei stationärer Einrichtung 41. Dabei liegt das Trägerband an der Fläche 46 an und verlässt danach die Fläche 46 ohne Klebstoff.

Bevorzugt erfolgt der Transport des Klebebands 48 durch einen Antrieb, der in Transportrichtung nach der Abgabestelle für die Klebefläche angeordnet ist, da sich dann praktisch kein Klebstoff mehr auf dem Trägerband befindet. In der dargestellten Ausführung ist dazu ein Rollenantrieb 49 für das Trägerband vorgesehen. Die Rollen dieses Rollenantriebs werden z.B. durch einen Schrittmotor oder einen Servomotor für das schrittweise Ziehen des Klebebandes im Takt der Vorrichtung bzw. Bearbeitungsstationen angetrieben. Nach dem Rollenantrieb kann das Trägerband entsorgt werden. Dies kann so erfolgen, dass eine angetriebene Aufwickelrolle 43 für das Trägerband vorgesehen ist. Die Einrichtung ist mit einer elektrischen Schnittstelle 64 für die elektrische Stromversorgung und für elektrische Steuersignale versehen. Ferner mit einem Druckluftanschluss 65 für den Fall eines pneumatisch angetriebenen Trennmittels.

Figur 12 zeigt das Trennmittel 45 der vorliegenden Ausführungsform und die Umlenkung des Klebebandes. Das Klebeband 48 wird bei dieser Ausführung des Trennmittels zwischen einer bewegbar antreibbaren Messerklinge 55 und einer Andruckplatte 56 hindurchgeführt. Das Trennmittel in Form der Klinge 55 ist an einer um die Achse 51 schwenkbaren Wippe 52 angeordnet, die mittels eines Antriebs, in diesem Beispiel mittels des Pneumatikzylinders 53, schwenkbar ist. Durch Auslenkung des Pneumatikzylinders wird das Trennmittel 55 gegen die Andruckplatte gedrückt. Durch die oberhalb des Pneumatikzylinders gezeigte Feder wird das Trennmittel zurückgestellt, wenn der Pneumatikzylinder druckentlastet wird. Anstelle des pneumatischen Antriebs kann ein elektrischer Antrieb treten, z.B. durch einen Elektromagneten oder durch piezoelektrische Antriebsmittel. Die Andruckplatte 56 ist vorzugsweise derart frei schwenkbar befestigt, dass sich ihre der Messerklinge 55 gegenüberliegende Oberfläche parallel zur Klinge einstellen kann, um einen gleichmässigen Schnitt durch den Klebefilm des Klebebandes zu bewirken. Das Trennmittel 55 ist ferner bevorzugt in Trennrichtung federnd befestigt, in dem gezeigten Beispiel mittels einer Blattfeder 54, die entgegen der Trennrichtung auslenken kann. Damit kann die Schneidkraft begrenzt werden, so dass keine Verletzung des Trägerbands 58 erfolgt sondern nur der Klebefilm durchtrennt wird. Weiter ist es bevorzugt, dass das Trennmittel elektrisch beheizbar ist, z.B. auf eine Temperatur im Bereich von 200 bis 250 Grad Celsius, um die Trennung des Klebstofffilms zu unterstützen und die Verschmutzung des Trennmittels mit Klebstoffmaterial zu vermeiden. Eine elektrische Heizung kann dazu im Trägerblock 50 für die Klinge 55 angeordnet sein. In Transportrichtung nach dem Trennmittel folgt die Umlenkung, die hier durch eine Nase 57 unterhalb der Andruckplatte ausgeführt ist. Diese Nase bildet an ihrer Unterseite die Fläche 46. Durch die Umlenkung kann eine einzelne Klebefläche der zuvor mit dem Trennmittel gebildeten einzelnen Klebeflächen in eine Position gebracht werden, in der diese Klebefläche auf den Deckel aufbringbar ist. Dazu könnte die Einrichtung 41 oder ein Teil davon auf den Deckel abgesenkt werden. Wie bereits erläutert, ist es aber bevorzugt, wenn in der Klebebearbeitungsstation der Deckel angehoben und, vorzugsweise federnd, gegen die Nase 57 gedrückt wird, wodurch die dort befindliche einzelne Klebefläche 30 auf den Deckel aufgebracht wird. In der Figur 12 ist dazu eine Deckelaufnahme 60 der Klebebearbeitungsstation 40 gezeigt, welche in Richtung des dort eingezeichneten Pfeils anhebbar und wieder absenkbar ist. Durch das Absenken gelangt der mit der Klebefläche 30 versehene Deckel wieder die Aufnahme des in Figur 12 nicht dargestellten Fördermittels, damit er im nächsten Schritt weiter gefördert werden kann und damit in die Umbiegestation 7 für die Aufreisslasche 29 gelangt, die dort auf die Klebefläche aufgebracht wird. Die Umlenkung des Klebebandes erfolgt vorzugsweise um ca. 90 Grad. Eine spitzwinklige Umlenkung oder eine Umlenkung um weniger als 90 Grad ist aber auch möglich. Vorzugsweise wird das Klebeband nach der Umlenkung horizontal geführt, um die Klebefläche für den vertikal angehobenen Deckel bereit zu stellen.

Der Betrieb der Klebebearbeitungsstation 40 erfolgt so, dass das Klebeband in dieser Bearbeitungsstation schrittweise transportiert wird. Nach jedem Schritt des Klebebandes erfolgt eine Trennung des Klebstofffilms auf dem Band 48 durch das angetriebene Trennmittel. Dies durchtrennt nur den Klebstofffilm und lässt das Trägerband 58 intakt. Die Schrittlänge bei der Förderung des Klebebandes 48 bestimmt die (somit einstellbare) Breite der Klebefläche 30, die Breite des Klebebandes 48 gibt die Länge der Klebefläche vor, wenn von der rechteckigen Klebefläche von Figur 9 gesprochen wird. Bei jedem Schritt des Klebebandtransports wird auch eine vom Trennmittel aus dem Kleberfilm gebildete einzelne Klebefläche als solche für das Aufbringen auf den Deckel bereitgestellt. Dies erfolgt in der gezeigten Ausführung durch die Umlenkung des Klebebandes nach dem Trennmittel, durch welche eine zuvor durch dieses gebildete Klebefläche so positioniert wird, dass sie auf den Deckel aufbringbar oder von diesem übernehmbar ist. Die Umlenkung fördert ferner die Ablösung der Kleberfläche vom Trägerband. Die schrittweise Arbeit der Klebebearbeitungsstation ist mit den anderen Bearbeitungsstationen der Vorrichtung synchronisiert, so dass das Trennen des Klebstofffilms und das Bereitstellen und Aufbringen der Klebefläche im Takt mit den anderen Bearbeitungsvorgängen in der Vorrichtung erfolgt. Für das Trennen könnte indes auch vorgesehen sein, dass es in der Klebebearbeitungsstation ausserhalb des genannten Taktes erfolgt und lediglich das Bereitstellen von vorgängig getrennten Klebeflächen im Takt erfolgt.

Die Bandrolle 42 wird im Normalbetrieb gebremst, um eine vorgegebene Klebebandzugspannung durch den Zugantrieb 49 für das Klebeband aufrecht zu erhalten. Solche Bremsmittel, ob mechanisch an der Klebebandrolle oder der Rollenhalterung angreifend oder ob elektrisch an der Rollenhalterung angreifend oder ob auf andere Weise bewirkt, sind dem Fachmann bekannt und werden hier nicht im Detail erläutert. Es wird ferner bevorzugt eine Überwachung für den Klebebandvorrat auf der Rolle vorgesehen, z.B. durch mechanische Abtastung von deren Umfang oder durch elektrische Überwachung der Rollendrehzahl über die Zeit. Um im Falle des Erreichens des Endes des Klebebands oder eines Klebebandrisses die Bandzugspannung für eine gewisse Klebebandlänge aufrecht zu erhalten und damit bis zu einem Stopp der Vorrichtung eine korrekte Aufbringung von Klebeflächen auf die Deckel zu gewährleisten, ist vorzugsweise eine weitere Bandbremse nach der Klebebandrolle und direkt vor dem Trennmittel 45 vorgesehen. Bei der in Figur 11 gezeigten Einrichtung 40 ist diese Bandbremse als Vakuumschiene 47 ausgeführt, welche das Band mittels eines Vakuums gegen die Schienenoberfläche zieht und damit eine Bremsung bewirkt. Diese Bremsung kann dauernd aktiv sein und zusätzlich oder alternativ zur Bremsung der Rolle 42 vorgesehen sein. Die Bremsung kann im Falle eines Bandrisses oder des Erreichens des Endes des Bandes verstärkt werden. Diese Bremsung kann aber auch im Normalbetrieb inaktiv sein und nur für das Erreichen des Endes oder für den Bandrissfall aktiviert werden. Das Ende des Klebebandes oder dessen Reissen wird durch dem Fachmann bekannte Detektionsmittel optischer und/oder mechanischer und/oder elektrischer Art festgestellt und an die Steuerung der Klebebearbeitungsstation gemeldet, wenn diese eine eigene Steuerung aufweist, oder bevorzugt an die Steuerung der Vorrichtung gemeldet, z.B. über die erwähnte elektrische Schnittstelle 64, damit bei Klebebandende oder einem Riss die Steuerung die Herstellung von Deckeln unterbrechen kann.

Bei der Herstellung von Aufreissdeckeln 28 aus Deckelringen 20' mit darauf aufgesiegelter Aufreissfolie 25 mit einer Aufreisslasche 29 wird die Aufreisslasche durch eine Klebefläche 30 in umgebogener Stellung auf der Aufreissfolie des Deckels fixiert. Dazu wird die Klebefläche auf dem Folienabschnitt, der auf dem Deckelring aufgesiegelt ist, derart aufgebracht, dass aus einem Klebeband mit Trägerband und darauf angeordnetem Kleber einzelne Klebeflächen mit einem Trennmittel vereinzelt werden. Jeweils eine solche Klebefläche wird auf dem Folienabschnitt jedes Deckels dort angeordnet, wo die umgebogene Aufreisslasche zu liegen kommt. Damit kann auf kostengünstige und sichere Weise eine Fixierung der Aufreisslasche erreicht werden.

## Patentansprüche

1. Vorrichtung, welche zur Herstellung von Aufreissdeckeln (28) ausgestaltet ist, mit einer Fördereinrichtung für Deckelteile und Deckel (20, 20', 28) und mit entlang der Fördereinrichtung angeordneten Bearbeitungsstationen für die Deckelteile und Deckel, umfassend eine Siegelstation (5, 6), welche zum Aufsiegeln eines eine Aufreisslasche (29) umfassenden Folienabschnitts (25) auf einen zum Deckelring (20') geformten Deckelteil ausgestaltet ist, sowie eine Umbiegestation (7), in welcher die Aufreisslasche (29) zur Oberseite des Folienabschnitts hin biegbar ist, **dadurch gekennzeichnet, dass** zwischen der Siegelstation und der Umbiegestation eine Klebebearbeitungsstation (40) mit einer Einrichtung (41) vorgesehen ist, durch welche ein Klebeband (48) transportierbar und eine von einem Trägerband (58) des Klebebandes ablösbare Klebefläche (30) bereitstellbar ist, die in der Klebebearbeitungsstation auf die Oberseite (26) des vorgängig auf den Deckelring aufgesiegelten Folienabschnitts an der Stelle aufbringbar ist, an welcher in der Umbiegestation die Aufreisslasche zu liegen kommt.

2. Vorrichtung nach Anspruch 2, **dadurch gekennzeichnet, dass** die Einrichtung ein Trennmittel (45) aufweist, welches derart angeordnet und ausgestaltet ist, dass aus einem auf dem Trägerband des Klebebands durchgehend angeordneten Klebematerial einzelne, im Wesentlichen voneinander getrennte Klebeflächen (30) bildbar sind.

3. Vorrichtung nach Anspruch 2, **dadurch gekennzeichnet, dass** das Trennmittel eine gesteuert in Richtung auf eine Andruckplatte auslenkbare Trennklinge umfasst, wobei zwischen Trennklinge und Andruckplatte ein Durchlaufraum für das Klebeband vorgesehen ist.

4. Vorrichtung nach Anspruch 2 oder 3, **dadurch gekennzeichnet, dass** das Trennmittel, insbesondere die Trennklinge, beheizbar ist.

5. Vorrichtung nach einem der Ansprüche 1 bis 4, **dadurch gekennzeichnet, dass** die Einrichtung eine Umlenkung (57) für das transportierte Klebeband bereitstellt, welche in Transportrichtung nach dem Trennmittel angeordnet ist und das Klebeband umlenkt, insbesondere um ca. 90 Grad und insbesondere im Wesentlichen in horizontale Lage, und dass die Klebebearbeitungsstation derart ausgestaltet ist, dass der jeweils mit der Klebefläche zu versehende Deckel gegen die Umlenkung hin bewegbar und an diese andrückbar ist.

6. Vorrichtung nach einem der Ansprüche 1 bis 5, **dadurch gekennzeichnet, dass** die Einrichtung eine Rollenhalterung für eine Klebebandrolle und eine zum umfangseitigen Aufliegen auf der Klebebandrolle angeordnete Umlenkrolle aufweist.

7. Vorrichtung nach einem der Ansprüche 1 bis 6, **dadurch gekennzeichnet, dass** die Einrichtung ein Antriebsmittel für den Transport des Klebebands aufweist, welches derart angeordnet und ausgestaltet ist, dass dadurch nach Ablösung der Klebeflächen lediglich auf das Trägerband einwirkbar ist.

8. Vorrichtung nach einem der Ansprüche 1 bis 7, **dadurch gekennzeichnet, dass** die Einrichtung Detektionsmittel für das Erreichen des Endes des Klebebandes und/oder ein Reissen des Klebebandes umfasst sowie Bremsmittel, für den freien Endbereich des Klebebands.

9. Verfahren zur Herstellung von Aufreissdeckeln (28), umfassend die Schritte
- Zuführen eines Bandes (35) von Aufreissfolienmaterial;
- Ausstanzen eines Folienabschnitts (25) mit einer Aufreisslasche (29) aus dem Band (35);
- Aufsiegeln des Folienabschnitts (25) auf einem Deckelring (20'); und
- Umbiegen der Aufreisslasche (29) auf den Deckel (28), **gekennzeichnet durch** den Schritt
- Aufbringen einer von einem Klebeband vereinzelten Klebefläche (30) auf den aufgesiegelten Folienabschnitt an einer Stelle, an welcher beim Aufreissdeckel (28) die umgebogene Aufreisslasche (29) zu liegen kommt.

10. Verfahren nach Anspruch 9, **dadurch gekennzeichnet, dass** die Klebefläche (30) durch ein Trennmittel vereinzelt wird, welches das Klebematerial des Klebebandes trennt und das Trägerband des Klebebandes intakt lässt.

11. Verfahren nach Anspruch 9 oder 10, **dadurch gekennzeichnet, dass** das Klebeband von einer Klebebandrolle schrittweise abgezogen und transportiert wird, wobei das Klebeband entlang des Transportwegs nach der Vereinzelung der Klebeflächen umgelenkt wird und dass nach der Umlenkung die Klebefläche auf die Folienabschnitt aufgebracht wird, indem der Deckel gegen die Umlenkstelle bewegt und an das Klebeband angedrückt wird.

## Claims

1. Apparatus for the manufacturing of peelable lids (28), comprising a transport device for lid parts and lids (20, 20', 28) and processing stations for the lid parts and lids arranged along the transport device, including a sealing station (5, 6) adapted to seal a foil section (25) provided with a peelable tab (29) onto a lid part shaped as lid ring (20'), as well as including a folding station (7) wherein the peelable tab (29) is folded towards the top side of the foil section, **characterized in that** a station for adhesive bonding (40) is provided between the sealing station and the folding station, including an application device (41) by means of which an adhesive tape (48) is transportable and an adhesive patch (30) removable from a carrier tape (58) of said adhesive tape is provided and applied onto the top side (26) of the foil section previously sealed onto the lid ring in the station for adhesive bonding, in a position where the peelable tab will become to lie in the folding station.

2. Apparatus according to claim 1, **characterized in that** the application device (41) includes a separating means (45) which is arranged and formed in such a way that individual adhesive patches (30) which are substantially separated from one another can be formed from an adhesive material arranged continuously on the carrier tape of the adhesive tape.

3. Apparatus according to claim 2, **characterized in that** the separating means comprises a separating blade which is controllably deflectable towards a pressure plate, and a travel path for the adhesive tape is provided by said application device (41) between the separating blade and the pressure plate.

4. Apparatus according to claim 2 or 3, **characterized in that** the separating means, particularly the separating blade, is heatable.

5. Apparatus according to one of the claims 1 to 4, **characterized in that** the application device (41) provides a deflector (57) for the transported adhesive tape which is arranged after the separating means in transport direction and which deflects the adhesive tape, particularly about around 90° and particularly substantially in a horizontal direction, and **in that** the station for adhesive bonding is formed in such a way that the respective lid to be provided with the adhesive patch is movable towards and pushable onto the deflector.

6. Apparatus according to one of the claims 1 to 5, **characterized in that** the application device (41) includes a holder for an adhesive tape roll and a deflecting roller arranged in order to rest on the circumferential side of the adhesive tape roll.

7. Apparatus according to one of the claims 1 to 6, **characterized in that** the application device (41) has an actuation means for the transport of the adhesive tape, which is arranged in such a way that it acts only upon the carrier tape of the adhesive tape after the removal of the adhesive patches.

8. Apparatus according to one of the claims 1 to 7, **characterized in that** the application device (41) comprises detection means for detecting the end of the adhesive tape and/or a rupture of the adhesive tape as well as braking means for the free end section of the adhesive tape.

9. Method for manufacturing peelable lids (28), comprising the steps of
- supplying a web (35) of peelable foil material;
- punching out a foil section (25) with a peelable tab (29) from the web (35);
- sealing the foil section (25) onto a lid ring (20'); and
- folding back the peelable tab (29) onto the lid (28), **characterized by** the step of
- applying an adhesive patch (30) separated from an adhesive tape onto the sealed foil section in a position where the folded back peelable tab (29) comes to lie on the peelable lid (28).

10. Method according to claim 9, **characterized in that** the adhesive patch (30) is separated by means of a separating means which separates the adhesive material of the adhesive tape and leaves the carrier tape of the adhesive tape intact.

11. Method according to claim 9 or 10, **characterized in that** the adhesive tape is taken off from an adhesive tape roll and transported stepwise, wherein the adhesive tape is deflected along the transport path after the separation of the adhesive patches from each other and **in that** an adhesive patch is applied onto the foil section after the deflection by moving the lid towards the deflecting position and pressing it against the adhesive tape patch.

## Revendications

1. Dispositif adapté pour la fabrication des couvercles arrachables (28), avec un dispositif de transport pour des parties de couvercle et des couvercles (20, 20', 28) et avec des postes de traitement pour les parties de couvercle et les couvercles, arrangés le long du dispositif de transport, comprenant un poste de scellage (5, 6) adaptée pour le scellage d'une partie d'une feuille (25), comprenant une languette d'arrachage (29), sur une partie de couvercle en forme d'un anneau de couvercle (20'), et avec un poste de pliage (7), dans lequel la languette d'arrachage (29) est pliée vers la face supérieure de la partie de feuille, **caractérisé en ce qu'**un poste d'encollage (40) est arrangé entre le poste de scellage et le poste de pliage, ayant une installation (41) à travers laquelle une bande adhésive (48) est transportée et une surface adhésive (30) qui peut être détachée d'une bande portante (58) de la bande adhésive est mise à disposition, la surface adhésive étant appliquée dans le poste d'encollage sur la face supérieure (26) de la partie de feuille antérieurement scellée sur l'anneau de couvercle dans une position ou la languette d'arrachage est posée dans le poste de pliage.

2. Dispositif selon la revendication 1, **caractérisé en ce que** l'installation a un moyen de séparation (45), arrangé et adapté de sorte que des surfaces (30) individuelles et essentiellement séparées sont formées à partir d'un matériau d'encollage arrangée de manière continue sur la bande portante de la bande adhésive.

3. Dispositif selon la revendication 2, **caractérisé en ce que** le moyen de séparation comprend une lame de séparation pivotable de manière commandable en direction d'une plaque de pression, un espace de passage pour la bande adhésive étant prévu entre la lame de séparation et la plaque de pression.

4. Dispositif selon la revendication 2 ou 3, **caractérisé en ce que** le moyen de séparation, particulièrement la lame de séparation, est chauffable.

5. Dispositif selon l'une des revendications 1 à 4, **caractérisé en ce que** l'installation fournit une déviation (57) pour la bande adhésive transportée, étant arrangée an aval du moyen de séparation, vu en direction de transport, et déviant la bande adhésive, particulièrement par environ 90° et particulièrement essentiellement dans une position horizontale, et **en ce que** le poste d'encollage est adapté de sorte que le couvercle prévu pour l'application de la surface d'encollage peut être déplacé vers la déviation et peut être poussé contre elle.

6. Dispositif selon l'une des revendications 1 à 5, **caractérisé en ce que** l'installation a un support de rouleau pour un rouleau de bande d'encollage et un rouleau de déviation arrangé autour du rouleau de bande d'encollage.

7. Dispositif selon l'une des revendications 1 à 6, **caractérisé en ce que** l'installation a un moyen d'entraînement pour le transport de la bande d'encollage, étant arrangé et adapté de sorte qu'il est seulement possible d'actionner uniquement sur la bande portante après le détachement des surfaces d'encollage.

8. Dispositif selon l'une des revendications 1 à 7, **caractérisé en ce que** l'installation comprend des moyens de détection du fin de la bande adhésive et/ou de rupture de la bande adhésive, ainsi que des moyens de freinage pour la section finale de la bande adhésive.

9. Procédé pour la fabrication de couvercles (28), comprenant les étapes
- d'alimentation d'une bande (35) de matériau de feuille d'arrachage;
- de découper de la bande (35) une partie de feuille (25) avec une languette d'arrachage (29);
- de sceller la partie de feuille (25) sur un anneau de couvercle (20');
- de plier la languette d'arrachage (29) sur le couvercle (28), **caractérisé par** l'étape
- d'appliquer une surface d'encollage (30) séparée d'une bande adhésive sur la partie de feuille scellée, dans une position dans laquelle la languette d'arrachage est pliée (29) sur le couvercle arrachable (28).

10. Procédé selon la revendication 9, **caractérisé en ce que** la surface d'encollage (30) est séparée par un moyen de séparation séparant le matériau d'encollage de la bande d'encollage et laissant intacte la bande portante de la bande adhésive.

11. Procédé selon la revendication 9 ou 10, **caractérisé en ce que** la bande adhésive est détachée d'un rouleau de bande adhésive et transportée graduellement, la bande adhésive étant déviée le long du chemin de transport après la séparation des surfaces adhésives et **en ce qu'**après la déviation la surface adhésive est appliquée sur la partie de feuille en déplaçant le couvercle vers le lieu de déviation et le poussant contre la bande adhésive.
